# FASCICULE DE BREVET EUROPEEN

(11) **EP 0 988 105 B1**
(45) Date de publication et mention de la délivrance du brevet: **28.08.2002**
(21) Numéro de dépôt: 98925769.6
(22) Date de dépôt: 22.05.1998
(51) Int. Cl.: B01F 7/16, B01F 1/00, B01J 19/18, C05B 1/00

(54) **DISPOSITIF POUR MELANGER ET DISSOUDRE DANS UN LIQUIDE DES GRANULES SOLIDES, EN PARTICULIER POUR LA PRODUCTION D'ENGRAIS PHOSPHO-AZOTES**
Vorrrichtung zum Mischen und Auflösen von Feststoffgranulaten in einer Flüssigkeit, insbesondere zur Herstellung von Phosphor und Stickstoff
DEVICE FOR MIXING AND DISSOLVING SOLID GRANULES IN A LIQUID, IN PARTICULAR FOR PRODUCING NITROPHOSPHATE FERTILISERS

(30) Priorité: 03.06.1997 FR 9706783
(43) Date de publication de la demande: 29.03.2000
(73) Titulaire: GRANDE PAROISSE S.A., F-92800 Puteaux (FR)
(72) Inventeur: LIMOUSIN, Laurent, F-31170 Tournefeuille (FR); PEUDPIECE, Jean-Bernard, F-76130 Mont-St.-Aignan (FR); LE MAT, Armand, F-76480 Bardouville (FR)
(74) Mandataire: Michardière, Bernard
(86) Numéro de dépôt international: FR9801030
(87) Numéro de publication internationale: WO98055213

(56) Documents cités:
- EP-A- 0 341 813
- EP-A- 0 698 662
- WO-A-92/10443
- US-A- 4 531 962
- US-A- 4 833 897
- PATENT ABSTRACTS OF JAPAN vol. 16, no. 180 (C-0935), 30 avril 1992 & JP 04 022431 A (HITACHI LTD), 27 janvier 1992,
- DATABASE WPI Week 9117 Derwent Publications Ltd., London, GB; AN 91-117764 XP002049685 & AU 62014 90 A (BAGULEY W,CLAMP T J) , 7 mars 1991
- PATENT ABSTRACTS OF JAPAN vol. 12, no. 279 (C-517), 1 août 1988 & JP 63 059341 A (TOYODA GOSEI CO LTD), 15 mars 1988,
- PATENT ABSTRACTS OF JAPAN vol. 97, no. 5, 30 mai 1997 & JP 09 010507 A (SUMITOMO BAKELITE CO LTD), 14 janvier 1997,

## Description

L'invention est relative à un dispositif pour préparer un réactif sulfo-uréique d'attaque d'un phosphate naturel, dans une installation de production d'engrais phospho-azotés, par mélange et dissolution, dans un liquide formé par une solution sulfurique, de granulés d'urée solides dont la densité est inférieure à celle du liquide, comprenant une cuve de forme cylindrique d'axe vertical, avec un fond, comportant des moyens d'agitation mécanique, et munie au moins d'une entrée pour le liquide, d'une entrée pour les granulés solides, et d'une sortie pour la solution.

WO-A-92/10443 et US-A 4 531 962 concernent des procédés pour la production d'engrais phospho-azotés.

Le procédé selon WO 92/10443 exploite l'attaque d'un phosphate naturel, tel que du phosphate tricalcique, par un réactif sulfo-uréique obtenu par mélange et dissolution de granulés solides, ou "prills", d'urée dans une solution d'acide sulfurique. Ce réactif d'attaque sulfo-uréique est une composition eutectique bien précise dont il importe de préparer, en continu, la solution dans des proportions déterminées.

Le problème est rendu difficile du fait que l'urée solide en granulés a une densité de 0.6 alors que la solution sulfurique, dans laquelle il convient de dissoudre les granulés d'urée, a une densité de 1.4. Les granulés solides ont ainsi fortement tendance à flotter ce qui n'est pas favorable à la dissolution, ni à l'homogénéisation.

Il convient en outre que cette dissolution des granulés solides s'effectue aussi rapidement que possible, notamment pour que le volume de la cuve ne soit pas trop important pour un débit de solution donnée.

US-A-4 531 962 concerne la production d'engrais phospho-azotés par réaction d'une solution azotée contenant par exemple de l'urée et du nitrate d'ammonium, avec l'acide phosphorique, dans une cuve munie de moyens d'agitation mécanique représentés de manière tout à fait schématique. Ce document ne mentionne pas de problème particulier de dissolution pour la réaction des granulés d'urée solides avec l'acide phosphorique.

Le dispositif proposé par US-A-4 531 962, avec des moyens d'agitation très schématiques, ne permettrait pas de préparer dans de bonnes conditions le réactif sulfo-uréique, concerné par l'invention.

On connaît par ailleurs divers documents montrant des moyens d'agitation mécanique, mais qui ne concernent pas la préparation d'un réactif sulfo-uréique.

EP 0 341 813 concerne un réacteur pour l'oxydation de composés aromatiques, avec un système d'agitation pour assurer une répartition efficace d'un gaz dans un liquide.

EP O 698 662 concerne un réacteur de fermentation pour la production de gomme xanthane avec des moyens d'agitation pour exercer un cisaillement et réduire la viscosité apparente.

US 4 833 897 vise à produire un mélange eau-glace exempt de sel, et fait intervenir deux turbines identiques montées sur un même arbre.

Le dispositif de l'invention vise à satisfaire les exigences contradictoires créées par une densité des granulés d'urée solides à dissoudre nettement inférieure à , en particulier inférieure à la moitié de, la densité de la solution sulfurique.

Le principal problème à résoudre est donc d'assurer une dissolution plus efficace, respectivement un rendement du réacteur plus élevé.

Selon l'invention, un dispositif pour préparer un réactif sulfo-uréique d'attaque d'un phosphate naturel, dans une installation de production d'engrais phospho-azotés, du genre défini précédemment, est caractérisé par le fait que l'entrée des granulés dans la cuve est située en partie haute, au-dessus du niveau du mélange dans cette cuve, et que les moyens d'agitation mécanique comprennent une turbine à pales droites inclinées, également connue sous le nom de "turbine sabre", propre à créer un entraînement des granulés solides vers le fond de la cuve , et une turbine radiale à pales droites, également connue sous le nom de "turbine de Rushton", située dans la cuve à un niveau inférieur à la turbine sabre, et propre à créer dans le mélange un mouvement favorable à la dissolution des granulés, en particulier un mouvement de cisaillement.

De préférence, les deux turbines sont montées sur un même arbre vertical, la turbine radiale étant située à une distance appropriée au-dessous de la turbine sabre .

Le diamétre extérieur des pales de la turbine radiale est généralement inférieur au diamètre extérieur des pales de la turbine sabre .

L'invention est également relative à l'utilisation d'un dispositif tel que défini précédemment pour préparer un réactif sulfo-uréique d'attaque d'un phosphate naturel, dans une installation de production d'engrais phospho-azotés, par mélange et dissolution dans une solution sulfurique de granulés d'urée solides dont la densité est inférieure à celle de la solution sulfurique .

L'invention consiste, mises à part les dispositions exposées ci-dessus, en un certain nombre d'autres dispositions dont il sera plus explicitement question ci-après à propos d'un exemple préféré de réalisation décrit avec référence aux dessins annexés, mais qui n'est nullement limitatif.

La Figure 1, de ces dessins, est un schéma d'un dispositif conforme à l'invention.

La Figure 2 est une coupe axiale verticale, avec partie en extérieur, à plus grande échelle, de la cuve du dispositif de la Figure 1.

La Figure 3 est une vue en plan à plus grande échelle, de la turbine sabre.

La Figure 4 est une vue en élévation à plus grande échelle de la turbine de Rushton, à six pales.

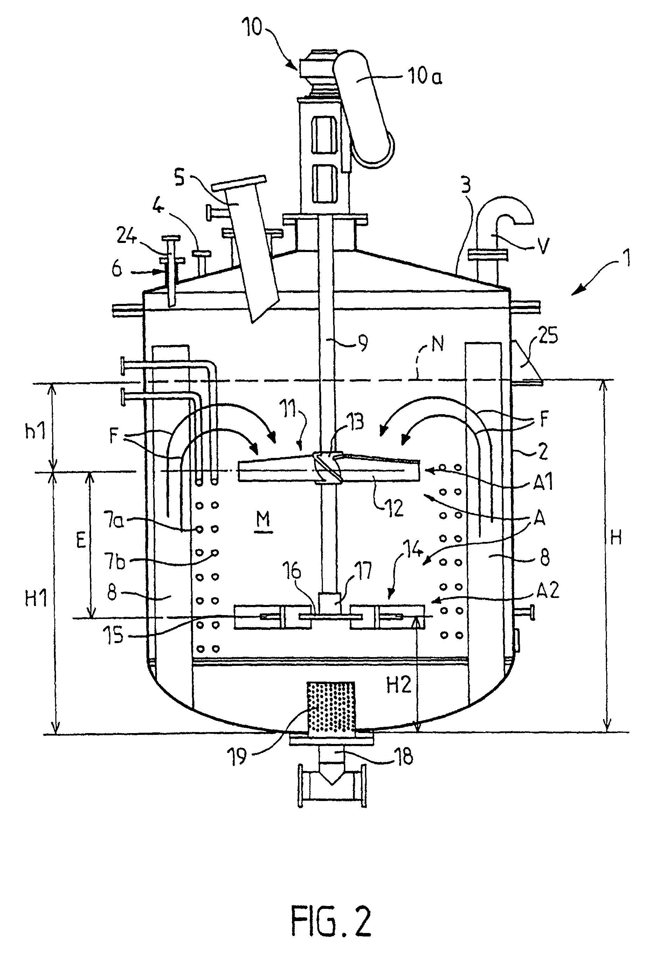

La Figure 5, enfin, est une vue de dessus par rapport à la Figure 4.

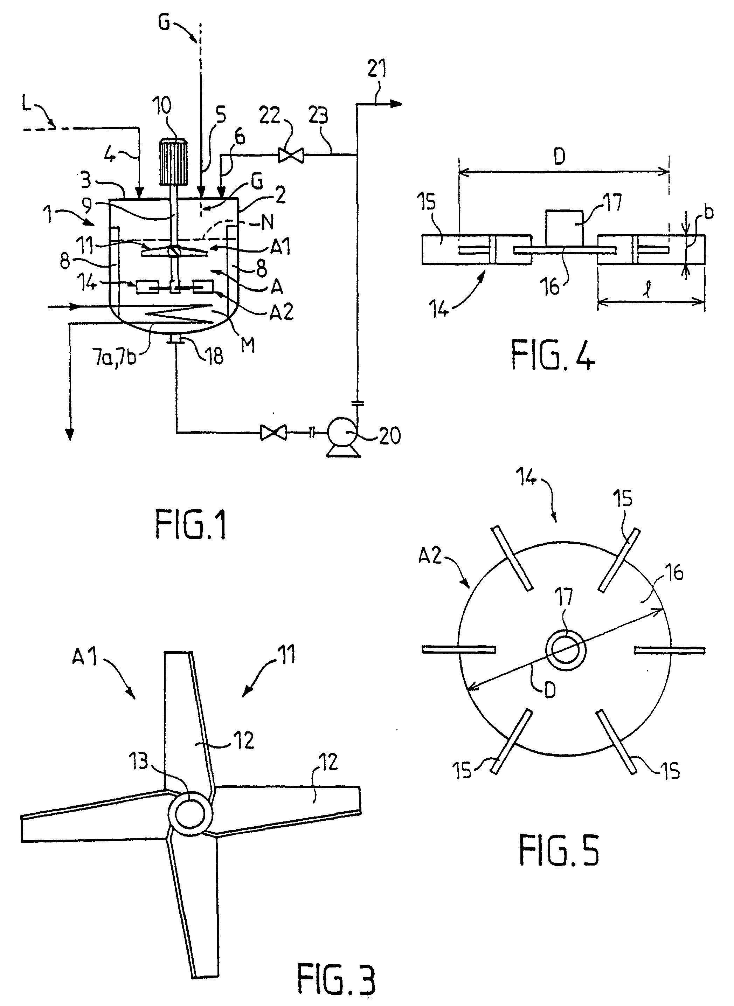

En se reportant à la Figure 1 des dessins, on peut voir un dispositif 1 pour mélanger et dissoudre dans un liquide L des granulés solides G d'une matière soluble dans le liquide mais ayant une densité inférieure à celle du liquide. Dans l'exemple considéré, les granulés solides G sont des granulés d'urée de densité 0.6, tandis que le liquide L est formé par une solution sulfurique de densité 1.4.

Le dispositif 1 comprend une cuve 2, de forme génfiraie cylindrique, d'axe vertical et dont le fond est bombé, convexe vers l'extèrieur. La cuve 2 est fezmèe par un couvercle démontable 3, en partie supérieure, sur lequel sont prévues une entrée 4 pour la solution sulfurique L, une entrée 5 pour les granulés G d'urée, avec de l'eau, et une entrée 6 pour le recyclage d'une fraction du mélange réactionnel M réalisé dans la cuve 2.

La dissolution de l'urée dans l'acide sulfurique étant exothermique, on prévoit dans la cuve 2 ( qui constitue un réacteur exploité en continu ) deux serpentins de refroidissement 7a, 7b concentriques . Les serpentins, comme visible sur Fig.2, comportent des spires s'étendant sensiblement sur la moitié de la hauteur de la cuve 2 et entourent des moyens d'agitation A. Les spires des serpentins sont situées radialement à l'intérieur de contre-pales ou déflecteurs 8 constitués par quatre lames verticales, espacées de 90°, situées dans des plans passant par l'axe vertical de la cuve 2. L'arête verticale extérieure des contre-pales 8 est voisine de la surface interne de la cuve 2. Le refroidissement assuré à l'aide des serpentins 7a, 7b est suffisant pour éviter de dépasser la température de 90°C dans la cuve, seuil au-dessus duquel l'urée incorporée dans le mélange M a tendance à se décomposer, comme indiqué dans EP-A- 0 560 882.

Les moyens d'agitation A comprennent un premier moyen d'agitation A1 propre à créer un entraînement des granulés G vers la partie inférieure de la cuve 2 dans le mélange réactionnel M, et un second moyen d'agitation A2 situé à un niveau inférieur à celui du premier moyen d'agitation A1. Ce second moyen A2 est propre à créer dans le mélange M un mouvement favorable à la dissolution des granulés G, en particulier un mouvement de cisaillement.

Les premier et second moyens d'agitation A1, A2 sont mécaniques et constitués par deux turbines de type différent fixées sur un même arbre d'entraînement 9 coaxial à la cuve 2. L'entraînement en rotation de l'arbre 9 est assuré par des moyens moteurs 10 prévus au-dessus du couvercle 3 à l'extérieur de la cuve.

Le moyen d'agitation A1 est constitué par une turbine 11 à pales droites 12, dont le plan moyen est incliné par rapport à l'axe géométrique vertical de l'arbre 9. Comme visible sur Fig.3, la largeur des pales 12 peut diminuer progressivement suivant le sens radial qui éloigne de l'axe. La turbine 11 est située sensiblement à mi-hauteur de la cuve 2. Le niveau normal N du mélange réactionnel dans la cuve 2 est situé à une distance h1 au-dessus du plan moyen de la turbine 11. Cette distance h1 est inférieure à la distance H1 de ce même plan moyen au fond de la cuve 2.

L'inclinaison des pales 12 et le sens de rotation de l'arbre 9 sont tels qu'un flux essentiellement axial et accessoirement radial est créé dans le mélange réactionnel M comme schématisé par les flèches F sur Fig.2 . Le mélange réactionnel est mis en mouvement de bas en haut dans les zones radiales extérieures et de haut en bas dans les zones situées radialement vers l'intérieur. Ce mouvement permet essentiellement d'aspirer les granulés d'urée solide arrivant par l'entrée 5 en haut de la cuve et de les entraîner dans le mélange réactionnel. Ce mouvement permet aussi de mélanger les liquides d'appoint et leur réactif déjà présent dans la cuve.

Dans l'exemple considéré, la turbine 11, ou turbine sabre, comporte quatre pales 12 angulairement espacées de 90°. La racine de ces pales est voisine de la surface extérieure de l'arbre 9 et est fixée sur un moyeu 13 calé sur cet arbre. Le flux créé par la turbine 11 peut s'écouler, suivant une direction parallèle à l'arbre 9, au voisinage de cet arbre.

Le second moyen d'agitation A2 comprend une turbine radiale 14 à pales droites, fixées à l'extrémité inférieure de l'arbre 9, coaxialement à la turbine 11. La turbine radiale 14, également appelée turbine de Rushton, comporte six pales 15 régulièrement espacées, formées par des plaquettes situées dans des plans passant par l'axe géométrique de l'arbre 9. Ces plaquettes sont fixées à mi-hauteur sur un disque 16 dont elles débordent radialement vers l'extérieur sensiblement sur la moitié de leur longueur. Un manchon 17 est fixé au-dessus du disque 16 en son centre pour le montage de la turbine 14 en bout de l'arbre 9. Le plan moyen de la turbine 14, qui correspond au plan moyen du disque 16, est plus proche du fond de la cuve 2 que du niveau N.

De préférence le plan moyen de la turbine 14 est situé à une distance H2 du fond de la cuve comprise entre le tiers et la moitié de la hauteur totale H du niveau N au-dessus du fond de la cuve ( 1/3 H ≤ H2 ≤ H/2 ).

La distance E à laquelle la turbine radiale 14 se trouve au-dessous de la turbine 11 est choisie pour obtenir le meilleur rendement de dissolution et d'homogénéisation.

Par sa rotation la turbine 14 crée un mouvement de cisaillement qui vient couper les filets du flux créé par la turbine supérieure 11, filets qui entraînent les granulés solides d'urée. Ce mouvement de cisaillement permet de dissoudre efficacement les granulés d'urée dans le réactif. Le mouvement créé par la turbine 14 permet également le maintien du réactif à sa composition en homogénéisant intimement les produits liquides et solides ajoutés dans la cuve 2.

En désignant par D le diamètre du disque 16 (Fig.4) on choisit avantageusement pour les pales 15 une longueur 1 de l'ordre de D/4 et une hauteur b de l'ordre de D/5.

Le fond de la cuve 2 comporte un orifice de sortie 18 muni d'une crépine 19 (Fig.2). Des moyens de pompage 20 sont raccordés à l'orifice 18 pour extraire de la cuve 2 le réactif d'attaque sulfo-uréique constitué par une solution d'urée dans une solution d'acide sulfurique. Une conduite 21 (Fig.1) dirige ce réactif vers une autre unité du type malaxeur (non représentée) dans laquelle un phosphate naturel est attaqué par le réactif, conformément au procédé de EP-A-0 560 882.

Une fraction du réactif pompé par les moyens 20, fraction dont le débit est contrôlé par une vanne 22, est recyclée dans la cuve 2 en étant renvoyée, par une canalisation 23, à l'entrée 6. Comme illustré sur la Fig.2, l'entrée 6 du recyclage comprend une tubulure 24 équipée d'un plongeur sans ajutage. L'entrée 4 de la solution sulfurique L est également munie d'un plongeur

La cuve 2 est équipée de jauges ou moyens équivalents (non représentés) destinés à contrôler les paramètres du processus tels que température, composition du mélange réactionnel, etc...

Les moyens moteurs 10 comprennent un réducteur dont l'encombrement extérieur apparaît sur la Fig.2, tandis que l'entraînement par moteur et courroies est symbolisé en 10a. Sur cette même Fig.2, on peut voir un évent V en partie haute de cuve.

Pour sa fixation, la cuve 2 comporte des supports 25 situés en partie haute de sa paroi cylindrique externe, légèrement au-dessous du couvercle 3, et régulièrement espacés .

Le diamètre extérieur des pales de la turbine radiale 14 est inférieur au diamètre extérieur des pales 12 de la turbine sabre 11, et en particulier est environ égal à 2/3 de ce diamètre.

A titre d'exemple de réalisation non limitatif, le diamètre extérieur des pales de la turbine 14 est d'environ 1 m, tandis que celui des pales de la turbine 12 est d'environ 1,5 m. Le diamètre intérieur de la cuve 2 est d'environ 3 m. Les contre-pales 8 font saillie vers l'intérieur sur une distance radiale d'environ 0,3 m et les deux serpentins 7b, 7a ont un diamëtre de spires d'environ 1,8 m et 2m. La hauteur de la cuve du fond jusqu'à la base du couvercle est d'environ 3,7 m, le niveau normal N se situant à environ 3,25 m au-dessus du fond.

Le fonctionnement du dispositif résulte des explications qui précèdent.

En marche normale, l'acide sulfurique arrive par l'entrée 4 et les granulés solides d'urée, avec de l'eau, arrivent par l'entrée 5 dans la cuve 2, par le dessus, dans des proportions spécifiques.

Une fraction du réactif pompé à la sortie 18 est réinjectée par l'entrée 6 en partie haute de la cuve.

La turbine sabre 11, entraînée en rotation par l'arbre 9, crée le mouvement axial déjà évoqué du réactif, ce qui permet d'aspirer les granulés solides dans le mélange réactionnel et d'éviter que ces granulés ne restent en surface du fait de leur densité nettement inférieure. Ce mouvement permet aussi de mélanger les liquides d'appoint et le mélange réactionnel déjà présent.

En cas d'incident sur cette turbine 11, les granulés d'urée solide flottent à la surface du réactif beaucoup plus dense, et il n'y a plus production du réactif avec la composition souhaitée. Une première conséquence d'un tel incident est une montée du niveau N de la cuve avec un arrêt de la production.

La turbine inférieure 14 à pales radiales crée un mouvement de cisaillement qui permet de dissoudre efficacement dans le mélange réactionnel les granulés solides, entraînés vers le bas par le mouvement dû à la turbine 11 . Cette turbine 14 permet aussi le maintien du réactif à sa composition en homogénéisant intimement les produits liquides et solides ajoutés dans la cuve 2.

En cas d'incident sur cette turbine 14, les granulés solides d'urée ne sont plus dissous complètement et forment alors des blocs épais et visqueux qui peuvent boucher la crépine 19 d'aspiration de la pompe 22 et/ou faire monter le niveau N de la cuve, entraînant là aussi un arrêt de la production.

Dans les deux cas d'incident sur la turbine 11 et/ou sur la turbine 14, un déséquilibre des bilans thermiques se produit et une modification de l'activité du réactif se produit également avec de très graves conséquences sur le produit fini (arrêt de la production, produit qui ne correspond pas au titre souhaité...).

L'exemple et les contre-exemples qui suivent contribuent à préciser les commentaires ci-dessus.

### EXEMPLE

Dans un réacteur conforme à la description ci-dessus, de capacité 10000 litres, on introduit 1100 litres d'acide sulfurique à 92 %. L'agitation est alors mise en route à 50 tr/mn. On introduit alors 4,0685 tonnes d'urée en maintenant, par refroidissement, la température du mélange en dessous de 80°C (afin de ne pas transformer l'urée en biurée). L'opération terminée, on met en route la régulation de température à 65°C (à plus ou moins 2°C). On introduit alors 178,3 litres d'eau afin d'obtenir un "pied de cuve" constitué du réactif tel que défini précédetment : 3,6 moles d'urée-1 mole d'acide sulfurique-1 mole d'eau. Dans ce même réacteur on introduit alors conjointement 6,7315 t/h de granulés d'urée, 1820 l/h d'acide sulfurique et 295,38373 l/h d'eau. Dès atteinte d'un niveau de remplissage de la cuve de 7500 litres, il est possible d'exporter 7,312 m³/h de réactif vers la cuve d'attaque du phosphate.

Sur un phosphate israélien ("ZIN à 31,1 % de P₂O₅"), il est alors possible de produire 15,35 tonnes/heure d'engrais phospho-azoté ( produit fini également désigné par le sigle USP ) en mélangeant 5 t/h de phosphate avec 7,312 m³/h de réactif (soit 10,35 t/h de réactif à 65°C) conformément à l'enseignement de la demande de brevet EP- A - 0 560 882 , ou WO 92 10443.

### CONTRE-EXEMPLES

1 / Le réacteur ci-dessus est équipé d'une pale sabre seule, placée à une distance H1 du fond de la cuve égale au 1/3 (tiers) de la hauteur de la cuve. Cette pale assure un mouvement de bas en haut du liquide. Ce mouvement permet aux granulés ( prills ) d'urée de circuler de la surface du mélange vers l'intérieur de la cuve. Cependant, compte tenu de la cinétique de dissolution de ces mêmes granulés dans un réactif sulfo-uréique tel que défini ci-dessus, il devient nécessaire d'augmenter le temps de séjour de ces granulés dans la cuve et donc de baisser les débits de production (et donc d'introduction des matières premières) de produit fini (USP).

Des essais pilotes ont montré que si cette opération de réduction des cadences n'est pas effectuée, des granulés non dissous passent dans le liquide d'alimentation du mélangeur réactif/phosphate et/ou vont boucher l'aspiration de la pompe. Dans tous les cas le réactif n'étant plus dans les conditions d'équilibre chimique tel que décrit dans EP-A-0 560 882 (WO92 10443), il y a altération du niveau d'attaque du phosphate et donc un produit fini non conforme à l'objet de la demande de brevet.

Il est à noter qu'il n'est pas possible industriellement d'agrandir la taille de la cuve (bilan thermique, taille de la pompe, taille de l'agitateur,...).

2/ Le réacteur ci-dessus est équipé d'une turbine de Rushton seule, implantée à une hauteur H2 égale à la moitié de la hauteur du réacteur . Elle ne crée pas assez de mouvement vertical pour faire couler les granulés d'urée dans le mélange; l'opération s'arrête donc à l'étape du "pied de cuve" sans permettre de constituer le réactif. L'urée se mouille puis s'agglomère en boule qui ne se dissout qu'au bout d'un temps très long (quand l'aspiration de pompe n'est pas bouchée avant).

Les explications qui précèdent font apparaître que la combinaison des deux turbines 11 et 14 montées coaxialement sur un même arbre, selon la disposition particulière de l'invention, permet d'obtenir des résultats particulièrement intéressants pour la dissolution d'un produit solide dans un liquide de densité nettement supérieure à celle du produit solide.

## Revendications

1. Dispositif pour préparer un réactif sulfo-uréique d'attaque d'un phosphate naturel, dans une installation de production d'engrais phospho-azotés, par mélange et dissolution, dans un liquide (L) formé par une solution sulfurique, de granulés d'urée solides (G) dont la densité est inférieure à celle du liquide, comprenant une cuve (2) de forme cylindrique d'axe vertical, avec un fond, comportant des moyens d'agitation mécanique , la cuve étant munie au moins d'une entrée (4) pour le liquide (L), d'une entrée (5) pour les granulés solides, et d'une sortie (18) pour la solution,
**caractérisé par le fait que** l'entrée (5) des granulés dans la cuve (2) est située en partie haute, au-dessus du niveau (N) du mélange dans cette cuve, et que les moyens d'agitation mécanique comprennent une turbine (11) à pales droites inclinées (12), également connue sous le nom de "turbine sabre", propre à créer un entraînement des granulés solides (G) vers le fond de la cuve (2), et une turbine radiale (14) à pales droites (15), également connue sous le nom de "turbine de Rushton", située dans la cuve à un niveau inférieur à la turbine sabre (11), et propre à créer dans le mélange un mouvement favorable à la dissolution des granulés, en particulier un mouvement de cisaillement.

2. Dispositif selon la revendication 1, **caractérisé par le fait que** la turbine (11) à pales droites inclinées comporte quatre pales.

3. Dispositif selon la revendication 1 ou 2, **caractérisé par le fait que** la turbine radiale (14) à pales droites comporte six pales.

4. Dispositif selon l'une des revendications précédentes, **caractérisé par le fait que** les deux turbines (11, 14) sont montées sur un même arbre vertical (9), la turbine radiale (14) étant située à une distance (E) appropriée au-dessous de la turbine sabre (11).

5. Dispositif selon l'une des revendications précédentes, **caractérisé par le fait que** le diamètre extérieur des pales de la turbine radiale (14) est inférieur au diamètre extérieur des pales (12) de la turbine sabre (11).

6. Dispositif selon la revendication 5, **caractérisé par le fait que** le diamètre extérieur des pales de la turbine radiale (14) est égal environ aux 2/3 du diamètre extérieur des pales (12) de la turbine sabre (11).

7. Dispositif selon la revendication 4, **caractérisé par le fait que** le plan moyen de la turbine radiale (14) est situé à une distance (H2) du fond de la cuve entre le 1/3 et la moitié de la hauteur totale (H) du niveau (N) au-dessus du fond de la cuve (1/3H ≤ H2 ≤ H/2).

8. Dispositif selon l'une des revendications précédentes, **caractérisé par le fait qu'**une entrée (6) est prévue dans le couvercle (3) de la cuve pour le recyclage d'une fraction du mélange réactionnel (M) réalisé dans la cuve.

9. Utilisation d'un dispositif tel que défini par l'une des revendications précédentes pour préparer un réactif sulfo-uréique d'attaque d'un phosphate naturel, dans une installation de production d'engrais phospho-azotés, par mélange et dissolution dans une solution sulfurique de granulés d'urée solides dont la densité est inférieure à celle de la solution sulfurique.

## Patentansprüche

1. Vorrichtung zur Herstellung eines Sulfoharnstoffes zur Umsetzung mit einem natürlichen Phosphat in einer Anlage zur Herstellung von phosphor-stickstoffhaltigen Düngemitteln durch Mischen und Lösen von festem Harnstoff in Granulatform (G) in einer Flüssigkeit (L), die durch eine Schwefelsäurelösung gebildet wird, wobei die Dichte des Harnstoffs in Granulatform unter der Dichte der Flüssigkeit liegt, wobei die Vorrichtung umfaßt: einen Behälter (2) von zylindrischer Form mit vertikal ausgerichteter Achse und mit einem Boden, der Einrichtungen zum mechanischen Rühren enthält, wobei der Behälter mit mindestens einem Einlaß (4) für die Flüssigkeit (L), einem Einlaß (5) für das feste Granulat und einem Auslaß (18) für die Lösung ausgestattet ist, **dadurch gekennzeichnet, daß** sich in dem Behälter (2) der Einlaß (5) für das Granulat im oberen Bereich über dem Niveau (N) des Gemisches in dem Behälter befindet, und dadurch, daß die Einrichtungen zum mechanischen Rühren ein Rührwerk (11) mit geraden, geneigten Blättern (12), das auch unter der Bezeichnung "Schrägblattrührer" bekannt ist und das geeignet ist, das feste Granulat (G) in Richtung des Bodens des Behälters (2) mitzuführen, und einen Querblattrührer (14) mit geraden Blättern (15) umfassen, der auch unter der Bezeichnung "Rushton-Turbine" bekannt ist und der sich in dem Behälter auf einem Niveau unter dem Schrägblattrührer (11) befindet und geeignet ist, in dem Gemisch eine Bewegung zu schaffen, die für das Lösen des Granulats günstig ist, insbesondere eine Scherbewegung.

2. Vorrichtung nach Anspruch 1, **dadurch gekennzeichnet, daß** das Rührwerk (11) mit geraden geneigten Blättern 4 Blätter aufweist.

3. Vorrichtung nach Anspruch 1 oder 2, **dadurch gekennzeichnet, daß** der Querblattrührer (14) mit geraden Blättern 6 Blätter aufweist.

4. Vorrichtung nach einem der vorhergehenden Ansprüche, **dadurch gekennzeichnet, daß** die beiden Rührwerke (11, 14) an der gleichen vertikalen Welle (9) montiert sind, wobei sich der Querblattrührer (14) in einer geeigneten Entfernung (E) unter dem Schrägblattrührer (11) befindet.

5. Vorrichtung nach einem der vorhergehenden Ansprüche, **dadurch gekennzeichnet, daß** der Außendurchmesser der Blätter des Querblattrührers (14) unter dem Außendurchmesser der Blätter (12) des Schrägblattrührers (11) liegt.

6. Vorrichtung nach Anspruch 5, **dadurch gekennzeichnet, daß** der Außendurchmesser der Blätter des Querblattrührers (14) etwa 2/3 des Außendurchmessers der Blätter (12) des Schrägblattrührers (11) beträgt.

7. Vorrichtung nach Anspruch 4, **dadurch gekennzeichnet, daß** sich die mittlere Ebene des Querblattrührers (14) im Abstand (H2) vom Boden des Behälters zwischen 1/3 und der Hälfte der Gesamthöhe (H) des Niveaus (N) über dem Boden des Behälters befindet (1/3 H ≤ H2 ≤ H/2).

8. Vorrichtung nach einem der vorhergehenden Ansprüche, **dadurch gekennzeichnet, daß** ein Einlaß (6) zur Rückführung eines Teils des in dem Behälter hergestellten Reaktionsgemisches (M) im Deckel (3) des Behälters vorgesehen ist.

9. Verwendung einer Vorrichtung nach einem der vorhergehenden Ansprüche zur Herstellung eines Sulfoharnstoffes zur Umsetzung mit einem natürlichen Phosphat in einer Anlage zur Herstellung von phosphor-stickstoffhaltigen Düngemitteln durch Mischen und Auflösen von festem Harnstoff-Granulat in einer Schwefelsäurelösung, wobei die Dichte des Harnstoffs in Granulatform unter der Dichte der Schwefelsäurelösung liegt.

## Claims

1. Device for preparing a sulpho-ureic reactant for digestion of a natural phosphate, in a plant for the production of phosphonitrogenous fertilizers, by mixing and dissolving, in a liquid (L) formed by a sulphuric solution, solid granules or particles (G) of urea whose density is lower than that of the liquid, including a vessel (2) of a cylindrical shape with a vertical axis, and with a bottom, comprising means of mechanical agitation, the vessel being provided with at least one entry (4) for the liquid (L), an entry (5) for the solid granules, and an exit (18) for the solution,
**characterized in that** the entry (5) of the granules into the vessel (2) is situated in a high portion, above the level (N) of the reaction mixture in this vessel, and **in that** the means of mechanical agitation include a turbine (11) with inclined straight blades (12), also known by the name of a "sabre turbine", capable of creating an entrainment of the solid granules (G) towards the bottom of the vessel (2), and a radial turbine (14) with straight blades (15), also known by the name of a "Rushton turbine", situated in the vessel at a level lower than that of the sabre turbine (11) and capable of creating in the reaction mixture a motion promoting the dissolving of the granules, in particular a shearing motion.

2. Device according to Claim 1, **characterized in that** the turbine (11) with inclined straight blades turbine comprises four blades.

3. Device according to Claim 1 or 2, **characterized in that** the radial turbine (14) with straight blades comprises six blades.

4. Device according to one of the preceding claims, **characterized in that** the two turbines (11, 14) are mounted on the same vertical shaft (9), the radial turbine (14) being situated below the sabre turbine (11) at an appropriate distance (E).

5. Device according to one of the preceding claims, **characterized in that** the external diameter of the blades of the radial turbine (14) is smaller than the external diameter of the blades (12) of the sabre turbine (11).

6. Device according to Claim 5, **characterized in that** the external diameter of the blades of the radial turbine (14) is equal approximately to 2/3 of the external diameter of the blades (12) of the sabre turbine (11).

7. Device according to Claim 4, **characterized in that** the mean plane of the radial turbine (14) is situated at a distance (H2) from the bottom of the vessel of between one third and one half of the total height (H) of the level (N) above the bottom of the vessel (1/3 H ≤ H2 ≤ H/2).

8. Device according to one of the preceding claims, **characterized in that** an entry (6) is provided in the vessel cover (3) for recycling a fraction of the reaction mixture (M) produced in the vessel.

9. Utilization of a device such as defined by one of the preceding claims for preparing a sulpho-ureic reactant for digestion of a natural phosphate, in a plant for the production of phosphonitrogenous fertilizers, by mixing and dissolving, in a sulphuric solution, solid granules or particles of urea whose density is lower than that of the sulphuric solution.
